**Europäisches Patentamt**

(19) **European Patent Office**

**Office européen des brevets**

(11) Numéro de publication: **0 018 898**
**B1**

(12) **FASCICULE DE BREVET EUROPEEN**

(45) Date de publication du fascicule du brevet:
01.08.84

(51) Int. Cl.³: **E 02 D 27/50**, F 16 L 1/04

(21) Numéro de dépôt: **80400563.5**

(22) Date de dépôt: **25.04.80**

(54) Système d'ancrage d'une conduite dans le fond marin.

(30) Priorité: 02.05.79 FR 7911033
10.04.80 FR 8008028

(43) Date de publication de la demande:
12.11.80 Bulletin 80/23

(45) Mention de la délivrance du brevet:
01.08.84 Bulletin 84/31

(84) Etats contractants désignés:
BE DE GB IT NL SE

(56) Documents cités:
FR - A - 2 367 874
GB - A - 1 333 472
NL - A - 6 713 772
US - A - 2 864 633

Le dossier contient des informations techniques
présentées postérieurement au dépôt de la demande et
ne figurant pas dans le présent fascicule.

(73) Titulaire: ANCHOR SYSTEMS, Sociéte Anonyme, Tour
Anjou 33 Quai National, 92806 Puteaux (FR)

(72) Inventeur: Tissier, Jean-Michel, 89 rue de la Pompe,
F-75016 Paris (FR)

(74) Mandataire: Bouju, André, 38 Avenue de la Grande
Armée, F-75017 Paris (FR)

ACTORUM AG

## Description

La présente invention concerne un système d'ancrage d'une conduite de transport de fluide dans le fond marin comprenant deux pieux enfoncés dans le fond marin de part et d'autre de la conduite, des moyens de rétention des pieux situés à la périphérie d'au moins une partie de la surface latérale de chaque pieu pour augmenter sa stabilité et sa résistance à l'arrachement. Le système d'ancrage comprend en outre un organe de maintien et de positionnement de la conduite rattaché à la partie supérieure des pieux.

Le brevet US-A-2 864 633 décrit une structure comportant les moyens précités. Toutefois, cette structure a pour but de fixer une conduite dans une tranchée destinée à être comblée. Il s'agit d'éviter que la conduite ne tende à sortir de sa tranchée sous l'effet de sollicitations diverses, telles que la contraction thermique notamment. Pour cela, on place sur la conduite un cavalier couvrant moins de 180° et on fixe ce cavalier avec deux tiges d'ancrage plantées obliquement.

Cette façon de faire est très appropriée au problème résolu par le US-A-2 864 633, qui consiste à prévenir un seul mouvement qui est le mouvement vers le haut. Ainsi, les ancrages inclinés résistent bien à l'arrachement vertical et le cavalier ne peut coulisser d'aucune façon le long des ancrages sauf en les tordant. Les écrous de fixation sont donc quasiment superflus.

L'ancrage d'une conduite de transport de fluide dans le fond marin doit répondre à des impératifs tout différents. Il s'agit de positionner la conduite posée sur le fond sous-marin qui dans la grande majorité des cas n'est pas préparé. Certaines parties de la conduite reposent sur le fond tandis que d'autres sont à une certaine distance au-dessus du fond. Le but de l'invention n'est pas de plaquer la conduite sur le fond comme le prévoit le US-A-2 864 633, mais d'assurer à la conduite un positionnement. Ce positionnement doit avant tout immuniser la conduite contre les effets des courant horizontaux transversaux qui peuvent se traduire par des efforts énormes s'exerçant sur la conduite entre deux ancrages. Le positionnement latéral est donc très important.

Le but de l'invention est ainsi de réaliser un système d'ancrage assurant un maintien latéral insensible à la tendance de la conduite à s'enfoncer, et dans lequel le ou les organes de positionnement peuvent être mis en place postérieurement à la conduite et aux pieux.

Suivant l'invention, le système est caractérisé en ce que la conduite est posée hors sol, que les deux pieux sont enfoncés parallèlement l'un à l'autre dans le fond marin, et en ce que l'organe de maintien et de positionnement est fixé à la partie supérieure des deux pieux et comporte des moyens s'appliquant sur la surface latérale de la conduite pour résister aux efforts transversaux horizontaux susceptibles de s'exercer sur celle-ci.

Du fait que les pieux sont parallèles, la structure de maintien peut sans difficulté être montée après la mise en place des pieux alors que cela ne pouvait avoir lieu que dans des conditions difficiles selon le US-A-2 864 633. En outre, il n'y a pas non plus de difficulté pour donner à la structure de maintien une hauteur sur les pieux qui correspond à la hauteur de la conduite sur le fond marin. Les moyens pour résister aux efforts latéraux sont inexistants selon le US-A-2 864 633. En effet, selon ce dernier, un effort s'exerçant latéralement sur la conduite favoriserait l'enfoncement de celle-ci dans le sol jusqu'à ce qu'elle échappe à son cavalier de maintien.

D'autres particularités et avantages de l'invention ressortiront encore de la description ci-après.

Aux dessins annexés, donnés à titre d'exemples:

la fig. 1 est une vue en élévation avec coupe partielle d'une première forme de réalisation du système d'ancrage selon l'invention,

la fig. 2 est une vue en plan suivant II–II de la fig. 1,

la fig. 3 est une vue analogue à la fig. 1 d'une deuxième forme de réalisation du système d'ancrage,

la fig. 4 est une vue en coupe suivant IV–IV de la fig. 3,

la fig. 5 est une vue en plan destinée à montrer le fonctionnement du dispositif des figs 3 et 4,

la fig. 6 est une vue analogue aux figs 1 et 3 d'une troisième forme de réalisation du système d'ancrage,

la fig. 7 est une vue en plan suivant VII–VII de la fig. 6,

la fig. 8 est une vue en élévation destinée à expliquer le fonctionnement du dispositif des figs 6 et 7 et

la fig. 9 est une vue en élévation d'une autre forme de réalisation du système d'ancrage.

Tous les modes de réalisation qui vont être décrits sont conçus pour l'installation sur le fond marin d'une conduite de transport de fluide, tel que le pétrole, le gaz naturel ou l'eau. Un certain nombre de tels systèmes sont disposés à intervalles sensiblement réguliers le long de la conduite de façon à maintenir celui-ci à la surface du fond marin et empêcher son déplacement notamment sous l'effet des courants, lesquels pourraient être à l'origine de la rupture de la conduite.

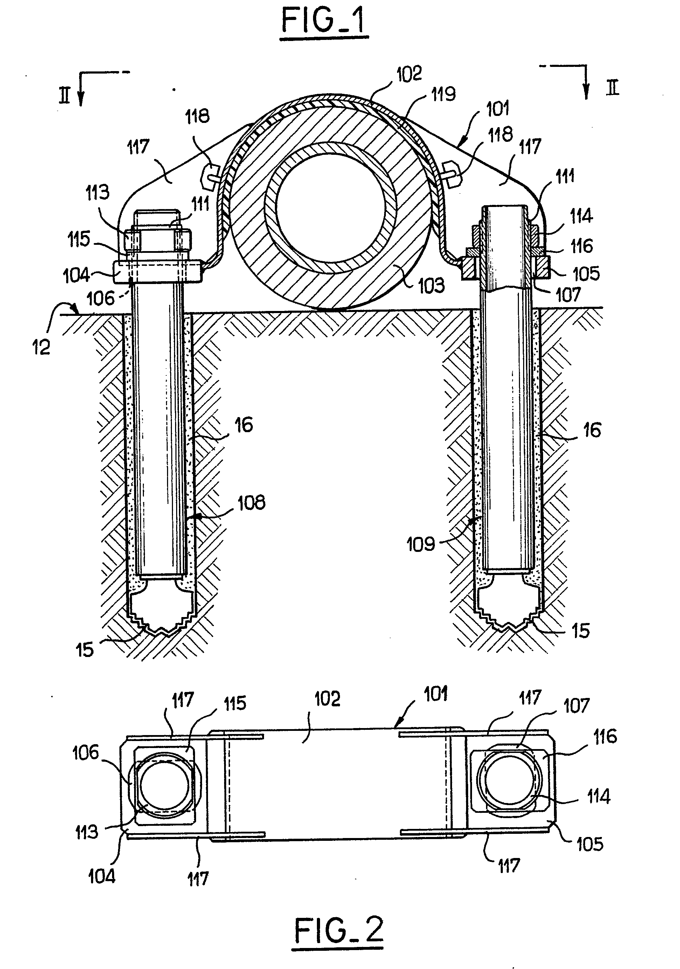

En référence aux figs 1 et 2, le système d'ancrage comprend un collier supérieur 101 formé d'une tôle 102 arrondie pour venir appuyer sur le dessus d'une conduite 103, et aux extrémités de laquelle sont soudés des bossages 104, 105 présentant des trous respectifs 106, 107 prévus pour s'engager sur des pieux 108, 109 enfoncés parallèlement de part et d'autre de la conduite.

Les pieux 108, 109 de structure tubulaire sont enfoncés dans le fond marin 12 de façon à ne laisser apparaître que leur partie supérieure. La partie inférieure des pieux 108, 109 est munie d'un trépan de forage 15 fixé à demeure. Autrement dit, ce trépan n'est utilisé qu'une fois pour la mise en place des pieux 108, 109 et ne peut être récupéré. Comme les pieux 108 ou 109 ont une structure tubulaire et sont ouverts à leur partie inférieure, au voisinage du trépan 15, on peut les utiliser de façon pratique pour injecter sous pression une coulée de ciment 16 qui envahit non seulement l'intérieur des pieux mais remplit également tous les interstices entre la surface latérale du pieu et le terrain avoisinant.

Les pieux présentent à leur partie supérieure des filetages 111, 112 pour recevoir des écrous 113, 114 qui retiennent le collier par l'intermédiaire de rondelles rectangulaires 115, 116.

Le trou 106 est allongé transversalement à la conduite 103, et le trou 107 est allongé parallèlement à cette conduite.

Enfin, quatre tôles raidisseuses 117 sont soudées dans les angles formés par la tôle 102 et les bossages 104, 105, aux deux extrémités du collier suivant l'axe de la conduite 103. Ces tôles sont prévues de dimensions telles que, dans toutes les directions, elles dépassent les têtes des pieux 104, 105, ainsi que toutes aspérités telles que des protections anodiques 118. En outre, leur contour extérieur est arrondi.

Le collier 101 présente une hauteur voisine mais légèrement inférieure au diamètre extérieur de la conduite 103. Les points d'attache entre les pieux 108, 109 et le collier 101 sont situés relativement bas de sorte que l'ensemble du système résiste bien aux efforts transversaux horizontaux s'exerçant sur la conduite.

Une feuille 119 d'un matériau élastique tel que le néoprène est interposée entre le collier 101 et la conduite 103.

Une fois le collier engagé sur les pieux, l'allongement du trou 106 permet un léger déplacement transversal du collier et l'allongement du trou 107 permet une légère rotation du collier autour du pieu 108. Ces déplacements sont suffisants pour permettre une application précise du collier sur la conduite sans nécessiter la présence d'une couche intermédiaire de rattrapage autre que la simple feuille élastique 119.

Une fois le collier posé, les têtes des pieux et les anodes 118 se trouvent enfermées latéralement dans les cavités formées par les tôles des nervures 117 et ne risquent pas de donner lieu à l'accrochage d'objets traînés au fond de la mer, tels que des câbles de manœuvre.

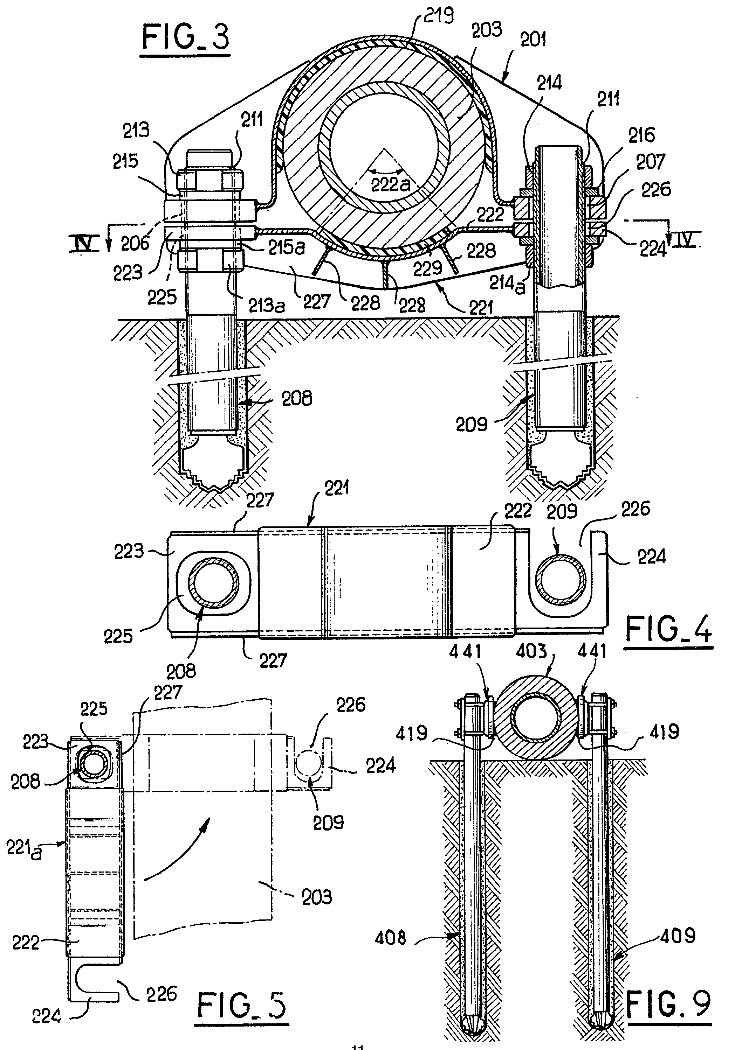

On va maintenant décrire, en référence aux figs 3 à 5, une deuxième forme de réalisation du système d'ancrage selon l'invention.

Le système d'ancrage comprend un collier supérieur 201 qui peut être le même que le collier 101 décrit précédemment, qui est engagé par des trous 206, 207 sur des pieux 208, 209, et qui est maintenu par des écrous 213, 214, vissés sur des filetages 211 desdits pieux, avec interposition de rondelles 215, 216.

Un collier inférieur 221 comprend une tôle 222 arrondie suivant un arc 222a pour s'appliquer sur le dessous de la conduite 203 et munie à ses extrémités de bossages 223, 224 percés de trous 225, 226. La partie arrondie 222a s'étend sur un arc nettement inférieur à 180°, de manière à conférer au collier 221 une forme généralement plate. Dans l'exemple décrit, cet arc est d'environ 90°. Le trou 225 est allongé transversalement à l'axe de la conduite 203 alors que le trou 226 est allongé parallèlement à cet axe et ouvert à l'une de ses extrémités.

Le collier inférieur 221 comprend encore deux nervures 227 analogues à celles du collier supérieur et consolidées par des raidisseurs 228. Comme le collier supérieur, il s'applique sur la conduite 203 par l'intermédiaire d'une feuille 229 de matériau élastique analogue à la feuille 219.

Le collier 221 s'appuie sur deux écrous 213a, 214a vissés sur les pieux, par l'intermédiaire de rondelles 215a, 216a.

Pour monter l'ensemble, on commence par visser les écrous 213a, 214a sur les pieux en les amenant aussi bas que possible. Puis on met en place les rondelles 215a, 216a.

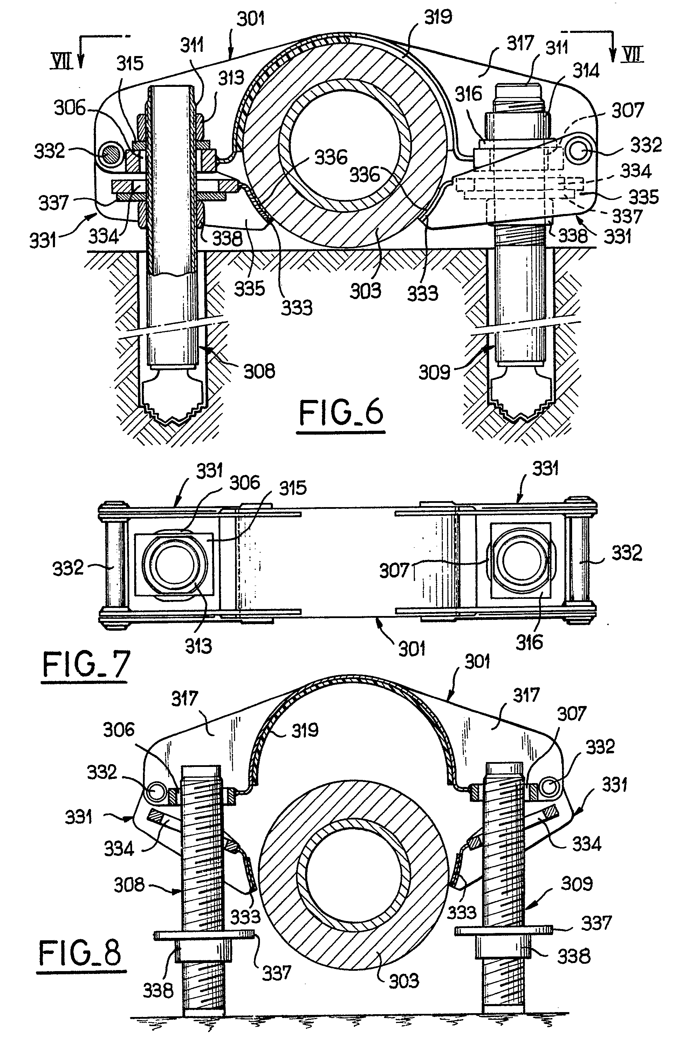

On engage ensuite le trou 225 du collier 221 sur le pieu 208 en maintenant le collier parallèle à l'axe de la conduite dans la position 221a (fig. 5). On fait ensuite tourner le collier de 90° pour engager le trou ouvert 226 sur le pieu 209, dans sa position définitive. Du fait de sa forme plate, la rotation sous la conduite s'effectue facilement. L'engagement du trou ouvert 226 sur le pieu 209 est facilitée par l'allongement du trou 225 qui permet un certain jeu transversal par rapport à la conduite.

On remonte ensuite les écrous 213a, 215a de manière à bien appliquer le collier 221 sur le dessous de la conduite 203. Enfin, on met en place le collier supérieur 201.

Ce type de collier formant berceau s'adapte bien aux conduites en faible suspension et, grâce à l'invention, ne présente aucune difficulté de montage.

On va maintenant décrire, en référence aux figs 6 à 8, une troisième forme de réalisation de l'invention.

Le système d'ancrage comprend encore un collier supérieur 301 du genre de ceux décrits plus haut et comportant notamment deux trous 306, 307 prévus pour s'engager sur des pieux 308, 309, le collier étant maintenu sur ces pieux par des écrous 313, 314 vissés sur des filetages 311 pratiqués sur ces pieux, avec interposition de rondelles 315, 316.

Deux mâchoires 331 sont articulées sur le collier 301 autour d'axes 332 parallèles à l'axe du conduit 303 et situés au-delà des trous 306, 307 par rapport à l'axe de la conduite. Ces mâchoires présentent chacune une partie arrondie concave 333 prévue pour venir s'appliquer sur le dessous de la conduite.

Elles présentent également des trous 334 pour le passage des pieux 308, 309. Ces trous sont allongés transversalement à la conduite, de manière suffisante pour permettre aux mâchoires engagées de prendre une position oblique (fig. 8) dans laquelle l'espace entre les mâchoires est au moins égal au diamètre de la conduite.

Le collier supérieur 301 comporte encore des nervures 317 analogues à celles décrites plus haut et une feuille de matériau élastique 319. Les mâchoires 331 comportent, de la même façon, des nervures 335 similaires et des feuilles de matériau élastique 336.

Des rondelles larges 337 sont engagées sur les pieux 308, 309 et s'appuient sur des écrous 338 vissés sur ces pieux pour constituer des butées pour les mâchoires 331 et les contraindre à se placer dans la position de la fig. 6.

Pour monter l'ensemble, on commence par mettre en place les écrous 338 et les rondelles-butées 337 à leur niveau définitif. Puis on présente l'ensemble formé par le collier supérieur et les mâchoires en plaçant ces dernières en position oblique de manière que les mâchoires puissent se glisser le long de la conduite (fig. 8). Cette opération est permise par l'allongement des trous 334 des mâchoires.

Quand les mâchoires viennent s'appuyer contre les butées 337, elles commencent à se redresser et prennent leur position définitive en serrant la conduite (fig. 6) quand on serre le collier supérieur 301 par les écrous 313, 314.

Grâce à ce dispositif, la mise en place d'un support inférieur sur une conduite déjà posée ne présente aucune difficulté. En outre, dans cette réalisation, l'ensemble est en une seule pièce, ce qui simplifie la manutention.

Suivant un autre mode de réalisation de l'organe de maintien, représenté sur la fig. 9, une conduite 403 repose sensiblement librement sur le fond marin car l'organe de maintien précité est simplement constitué de deux butées 441 disposées en regard l'une de l'autre et fixées respectivement à la partie supérieure des pieux 408, 409. Les butées 441 sont en contact avec la surface latérale de la conduite 403, de préférence par l'intermédiaire d'une garniture de néoprène 419.

En variante, les trous des colliers, pour l'engagement des pieux, pourraient être réalisés sous forme tubulaire pour un montage glissant sur les pieux, une ou deux coupures du tube suivant une génératrice permettant un serrage par boulons et écrous sur le pieu. Toutefois, une telle réalisation laisse une moins grande latitude de mise au point et nécessiterait des moyens d'ajustement plus souples que la couche de matériau élastique précité.

**Revendications**

1. Système d'ancrage d'une conduite de transport de fluide (103, 203, 303, 403) dans le fond marin comprenant deux pieux (108, 109, 208, 209, 308, 309, 408, 409) enfoncés dans le fond marin (12) de part et d'autre de la conduite, des moyens de rétention des pieux situés à la périphérie d'au moins une partie de la surface latérale de chaque pieu pour augmenter sa stabilité et sa résistance à l'arrachement, le système d'ancrage comprenant en outre un organe de maintien et de positionnement de la conduite (101, 201, 221, 301, 331, 441) rattaché à la partie supérieure des pieux, caractérisé en ce que la conduite (103, 203, 303, 403) est posée hors sol, en ce que les deux pieux (108, 109, 208, 209, 308, 309, 408, 409) sont enfoncés parallèlement l'un à l'autre dans le fond marin (12), et en ce que l'organe de maintien et de positionnement (101, 201, 221, 301, 331, 441) est fixé à la partie supérieure des deux pieux et comporte des moyens s'appliquant sur la surface latérale de la conduite (102, 221, 331, 441) pour résister aux efforts transversaux horizontaux susceptibles de s'exercer sur celle-ci.

2. Système d'ancrage conforme à la revendication 1, caractérisé en ce que lesdits moyens de rétention comprennent une coulée de ciment (16) au moins située entre la surface latérale desdits pieux (108, 109, 208, 209, 308, 309, 408, 409) et le terrain avoisinant.

3. Système d'ancrage conforme à la revendication 2, caractérisé en ce que chaque pieu (108, 109, 208, 209, 308, 309, 408, 409) comprend une pièce tubulaire creuse envahie, in situ, par ladite coulée de ciment (16).

4. Système d'ancrage conforme à l'une des revendications 1 à 3, caractérisé en ce que l'organe de maintien comprend un collier supérieur (101, 201, 301) appuyant sur la partie supérieure de la conduite (103, 203, 303, 403).

5. Système d'ancrage conforme à la revendication 4, caractérisé en ce que au titre des moyens pour résister aux efforts transversaux horizontaux, le collier supérieur (101) a une hauteur voisine mais légèrement inférieure au diamètre extérieur de la conduite (103).

6. Système d'ancrage conforme à l'une des revendications 4 ou 5, caractérisé en ce que le collier (101) comporte deux trous (106, 107, 206, 207, 306, 307) espacés d'une distance correspondant à l'espacement des pieux (108, 109, 208, 209, 308, 309) et engagés dans leurs extrémités supérieures, ces trous étant allongés, l'un (107, 207, 307) parallèlement à l'axe de la conduite (103, 203, 303) et l'autre (106, 206, 306) transversalement à cet axe.

7. Système d'ancrage conforme à l'une des revendications 4 à 6, caractérisé en ce que l'organe de maintien comprend en outre un organe formant un collier inférieur (221) monté entre les pieux (208, 209) et présentant une concavité dirigée vers la concavité du collier supérieur (201) de façon à former un support surélevé par rapport au fond marin, la conduite (203) reposant sur le collier inférieur (221).

8. Système d'ancrage conforme à la revendication 7, caractérisé en ce que le collier inférieur (221) présente une partie courbe de coopération avec la conduite (103) s'étendant sur un arc inférieur à 180°.

9. Système d'ancrage conforme à la revendication 8, caractérisé en ce que l'un (225) des trous (225, 226) du collier inférieur est allongé transversalement à l'axe de conduite (203), et en ce que l'autre trou (226) est allongé parallèlement à cet axe et ouvert à l'une de ses extrémités.

10. Système d'ancrage conforme à la revendication 7, caractérisé en ce que deux mâchoires de verrouillage (331) sont articulées sur le collier (301) s'appliquant sur le dessus de la conduite (303) autour d'axes (332) parallèles à l'axe de la conduite et situés au-delà des trous de fixation (306, 307) de ce collier sur les pieux (308, 309), ces mâchoires présentent chacune une portion arrondie concave (333) pour venir s'appliquer sur le dessous de la conduite (303) et présentant des trous (334) de passage des pieux (308, 309), ces trous étant suffisamment allongés transversalement à la conduite pour permettre aux mâchoires (331) engagées sur les pieux (308, 309) de prendre une position oblique laissant entre elles un espace au moins égal au diamètre de la conduite (303).

11. Système d'ancrage conforme à la revendication 10, caractérisé en ce que les pieux (308, 309) portent chacun des moyens de butée réglables (337, 338) pour recevoir l'une des mâchoires (331) et provoquer l'application de ladite mâchoire sur le dessous de la conduite (303) lors du serrage du collier supérieur (301).

12. Système d'ancrage conforme à l'une des revendications 4 à 11, caractérisé en ce que le collier (101, 201, 301) s'appliquant sur le dessus de la conduite comprend deux nervures (117, 227, 317) sensiblement perpendiculaires à l'axe de la conduite (103, 203, 303), situées aux extrémités du collier suivant l'axe de la conduite et de dimensions telles qu'elles dépassent les têtes des pieux (108, 109; 208, 209; 308, 309) suivant toutes les directions.

13. Système d'ancrage conforme à l'une des revendications 1 à 3, pour l'installation sur le fond marin d'une conduite de transport de fluide, caractérisé en ce que, la conduite (403) reposant sensiblement librement sur le fond marin, l'organe de maintien comprend deux butées (441) disposées en regard l'une de l'autre, fixées respectivement à la partie supérieure de chaque pieu (408, 409) et en contact avec la surface latérale de la conduite (403).

14. Système d'ancrage conforme à l'une des revendications 4 à 12, caractérisé en ce que chaque collier (101; 201, 211; 301, 331) comporte, sur sa partie prévue pour s'appuyer sur la conduite, une couche de matériau élastique (119; 219, 229; 319, 336).

**Claims**

1. A system for anchoring a fluid conveying pipe (103, 203, 303, 403) in the sea bed, comprising two piles (108, 109, 208, 209, 308, 309, 408, 409) embedded in the sea bed (12) on either side of the pipe, pile retaining means situated at the periphery of at least part of the lateral surface of each pile to increase its stability and resistance to detachment, the anchoring system further comprising a pipe holding and positioning means (101, 201, 221, 301, 331, 441) secured to the top part of the piles, characterised in that the pipe (103, 203, 303, 403) is laid outside the ground, the two piles (108, 109, 208, 209, 308, 309, 408, 409) are embedded parallel to one another in the sea bed (12) and in that the holding and positioning means (101, 201, 221, 301, 331, 441) is secured to the top part of the two piles and comprises means which are applied to the side surface of the pipe (102, 221, 331, 441) to withstand horizontal transverse forces to which the pipe is likely to be subjected.

2. An anchoring system according to claim 1, characterised in that the said retaining means comprise a cement casting (16) situated at least between the side surface of said piles (108, 109, 208, 209, 308, 309, 408, 409) and the adjacent ground.

3. An anchoring system according to claim 2, characterised in that each pile (108, 109, 208, 209, 308, 309, 408, 409) comprises a hollow tubular member receiving the said cement casting (16) in situ.

4. An anchoring system according to any one of claims 1 to 3, characterised in that the holding means comprises a top collar (101, 201, 301) resting on the top part of the pipe (103, 203, 303, 403).

5. An anchoring system according to claim 4, characterised in that to form the means for withstanding horizontal transverse forces the top collar (101) is of a height close to but slightly less than the outside diameter of the pipe (103).

6. An anchoring system according to claim 4 or 5, characterised in that the collar (101) has two holes (106, 107, 206, 207, 306, 307) spaced apart by a distance corresponding to the spacing of the piles (108, 109, 208, 209, 308, 309) and engaging in their top ends, said holes being elongated, one (107, 207, 307) parallel to the axis of the pipe (103, 203, 303) and the other (106, 206, 306) transversely of said axis.

7. An anchoring system according to any one of claims 4 to 6, characterised in that the holding means further comprises a member which forms a bottom collar (221) mounted between the piles (108, 229) and having a concavity extending towards the concavity of the top collar (201) so as to form an elevated support with respect to the sea bed, the pipe (203) resting on the bottom collar (221).

8. An anchoring system according to claim 7, characterised in that the bottom collar (221) has a curved part cooperating with the pipe (103) and extending over an arc of less than 180°.

9. An anchoring system according to claim 8, characterised in that one (225) of the holes (225, 226) of the bottom collar is elongated transversely of the pipe axis (203) and in that the other hole (226) is elongated parallel to such axis and open at one of its ends.

10. An anchoring system according to claim 7, characterised in that two locking jaws (331) are articulated on the collar (301) resting on the top of the pipe (303) about axes (332) parallel to the pipe axis and situated beyond the holes (306, 307) for fixing said collar on the piles (308, 309), said jaws each having a concave rounded portion (333) to rest on the bottom of the pipe (303) and having holes (334) for the passage of the piles (308, 309), these holes being sufficiently elongated transversely of the pipe to allow the jaws (331) engaging the piles (308, 309) to assume an oblique position leaving between them a space equal at least to the diameter of the pipe (303).

5

11. An anchoring system according to claim 10, characterised in that the piles (308, 309) each bear adjustable abutment means (337, 338) to receive one of the jaws (331) and cause the said jaw to be applied to the bottom of the pipe (303) on clamping of the top collar (301).

12. An anchoring system according to any one of claims 4 to 11, characterised in that the collar (101, 201, 301) resting on the top of the pipe comprises two ribs (117, 227, 317) substantially perpendicular to the axis of the pipe (103, 203, 303) situated at the ends of the collar along the axis of the pipe and of dimensions such that they project beyond the heads of the piles (108, 109; 208, 209; 308, 309) in all directions.

13. An anchoring system according to any one of claims 1 to 3, for installation of a fluid conveying pipe on the sea bed, characterised in that the pipe (403) resting substantially freely on the sea bed, the holding means comprises two abutments (441) disposed opposite one another and secured respectively to the top part of each pile (408, 409) and in contact with the side surface of the pipe (403).

14. An anchoring system according to any one of claims 4 to 12, characterised in that each collar (101; 201, 211; 301, 331) has a layer of elastic material (119; 219, 229; 319, 336) on its part by which it rests on the pipe.

## Patentansprüche

1. System zur Verankerung einer Leitung (103, 203, 303, 403) für den Transport von fluiden Medien im Meeresboden, mit zwei Pfählen (108, 109, 208, 209, 308, 309, 408, 409), die in den Meeresboden (12) auf beiden Seiten der Leitung eingeschoben sind, mit am Umfang wenigstens eines Teils der seitlichen Oberfläche jedes Pfahles gelegenen Mitteln, die die Pfähle halten und ihre Stabilität sowie ihren Widerstand gegen das Ausreissen steigern, wobei das Verankerungssystem ferner ein Organ (101, 201, 221, 301, 331, 441) zum Halten und Positionieren der Leitung umfasst, welches an den oberen Bereich der Pfähle angeschlossen ist, dadurch gekennzeichnet, dass die Leitung (103, 203, 303, 403) ausserhalb des Bodens verlegt ist, dass die beiden Pfähle (108, 109, 208, 209, 308, 309, 408, 409) parallel zueinander in den Meeresboden (12) eingeschoben sind und dass das Halte- und Positionierorgan (101, 201, 221, 301, 331, 441) an dem oberen Bereich der beiden Pfähle befestigt ist und Mittel (102, 221, 331, 441) umfasst, die an der seitlichen Oberfläche der Leitung anliegen, um sich den waagerechten transversalen Beanspruchungen zu widersetzen, die auf diese ausgeübt werden können.

2. Verankerungssystem nach Anspruch 1, dadurch gekennzeichnet, dass die Haltemittel eine Zementvergiessung (16) umfassen, die wenigstens zwischen der seitlichen Oberfläche der Pfähle (108, 109, 208, 209, 308, 309, 408, 409) und dem benachbarten Erdreich angeordnet ist.

3. Verankerungssystem nach Anspruch 2, dadurch gekennzeichnet, dass jeder Pfahl (108, 109, 208, 209, 308, 309, 408, 409) ein rohrförmiges hohles Teil umfasst, in das die an Ort und Stelle eingegossene Zementfüllung (16) eindringt.

4. Verankerungssystem nach einem der Ansprüche 1 bis 3, dadurch gekennzeichnet, dass das Halteorgan einen oberen Bügel (101, 201, 301) umfasst, welcher Druck auf den oberen Teil der Leitung (103, 203, 303, 403) ausübt.

5. Verankerungssystem nach Anspruch 4, dadurch gekennzeichnet, dass als Mittel, welche sich den waagrechten transversalen Beanspruchungen widersetzen, der obere Bügel (101) eine Höhe aufweist, die dem Aussendurchmesser der Leitung (103) nahekommt, aber etwas kleiner als dieser ist.

6. Verankerungssystem nach Anspruch 4 oder 5, dadurch gekennzeichnet, dass der Bügel (101) zwei Löcher (106, 107, 206, 207, 306, 307) umfasst, die einen Abstand voneinander haben, welcher dem Abstand zwischen den Pfählen (108, 109, 208, 209, 308, 309) entspricht, und die an deren oberen Enden angreifen, wobei diese Löcher gestreckt sind, und zwar eines von ihnen (107, 207, 307) parallel zur Achse der Leitung (103, 203, 303) und das andere (106, 206, 306) transversal zu dieser Achse.

7. Verankerungssystem nach einem der Ansprüche 4 bis 6, dadurch gekennzeichnet, dass das Halteorgan ferner ein Organ umfasst, welches einen unteren Bügel (221) bildet, der zwischen den Pfählen (208, 209) angebracht ist und eine Konkavgestalt aufweist, welche der Konkavgestalt des oberen Bügels (201) zugewendet ist, so dass eine gegenüber dem Meeresboden hochgelegte Halterung gebildet ist, wobei die Leitung (203) auf dem unteren Bügel (221) ruht.

8. Verankerungssystem nach Anspruch 7, dadurch gekennzeichnet, dass der untere Bügel (221) einen gekrümmten Teil zum Zusammenwirken mit der Leitung (103) aufweist, der sich über einen Bogen von weniger als 180° erstreckt.

9. Verankerungssystem nach Anspruch 8, dadurch gekennzeichnet, dass eines (225) der Löcher (225, 226) des unteren Bügels transversal zur Achse der Leitung (203) gestreckt ist und dass das andere Loch (226) parallel zu dieser Achse gestreckt und an einem seiner Enden geöffnet ist.

10. Verankerungssystem nach Anspruch 7, dadurch gekennzeichnet, dass an dem an der Oberseite der Leitung (303) anliegenden Bügel (301) zwei Klemmbacken (331) um Achsen (233) angelenkt sind, die parallel zur Achse der Leitung sind und jenseits von den Befestigungslöchern (306, 307) zur Befestigung dieses Bügels an den Pfählen (308, 309) liegen, wobei diese Backen jeweils einen konkaven gerundeten Teil (333) aufweisen, um an der Unterseite der Leitung (303) anzuliegen, sowie Löcher (334) für den Durchgang der Pfähle (308, 309) aufweisen und wobei diese Löcher transversal zu der Leitung ausreichend gestreckt sind, um den die Pfähle (308, 309) umgreifenden Backen (331) zu gestatten, eine schräge Stellung einzunehmen, in der zwischen ihnen ein Raum verbleibt, der wenigstens gleich dem Durchmesser der Leitung (303) ist.

11. Verankerungssystem nach Anspruch 10, dadurch gekennzeichnet, dass die Pfähle (308, 309) jeweils einstellbare Anschlagmittel (337, 338) umfassen, um eine der Backen (331) aufzunehmen und das Anlegen dieser Backe gegen die Unterseite der Leitung (303) beim Spannen des oberen Bügels (301) hervorzurufen.

12. Verankerungssystem nach einem der Ansprüche 4 bis 11, dadurch gekennzeichnet, dass der Bügel (101, 201, 301), der auf der Oberseite der Leitung aufliegt, zwei Rippen (117, 227, 317) umfasst, die ungefähr senkrecht zur Achse der Leitung (103, 203, 303) sind und an den auf die Achse der Leitung bezogenen Enden des Bügels liegen sowie solche Abmessungen besitzen, dass sie in allen Richtungen über die Köpfe der Pfähle (108, 109; 208, 209; 308, 309) hinausstehen.

13. Verankerungssystem nach einem der Ansprüche 1 bis 3 zur Verlegung einer Leitung zum Transport fluider Medien auf dem Meeresboden, dadurch gekennzeichnet, dass das Halteorgan bei im wesentlichen frei auf dem Meeresboden ruhender Leitung (403) zwei einander gegenüber angeordnete Anschläge (441) umfasst, die jeweils an dem oberen Teil eines der Pfähle (408, 409) befestigt und mit der seitlichen Oberfläche der Leitung (403) in Berührung sind.

14. Verankerungssystem nach einem der Ansprüche 4 bis 12, dadurch gekennzeichnet, dass jeder Bügel (101; 201; 211; 301, 331) an seinem Bereich, der zur Abstützung an der Leitung bestimmt ist, eine Schicht aus elastischem Material (119; 219, 229; 319, 336) umfasst.

## FIG_1

## FIG_2

**0 018 898**

FIG_3

FIG_4

FIG_5

FIG_9

FIG_6

FIG_7

FIG_8